(19) Europäisches Patentamt / European Patent Office / Office européen des brevets

(11) **EP 1 931 461 B1**

(12) **FASCICULE DE BREVET EUROPEEN**

(45) Date de publication et mention
de la délivrance du brevet:
**24.11.2010 Bulletin 2010/47**

(21) Numéro de dépôt: **06764794.1**

(22) Date de dépôt: **15.06.2006**

(51) Int Cl.:
**B01L 3/00** (2006.01)      **B81B 7/00** (2006.01)
**B01F 13/00** (2006.01)      **B01J 19/00** (2006.01)

(86) Numéro de dépôt international:
**PCT/FR2006/001360**

(87) Numéro de publication internationale:
**WO 2007/031615 (22.03.2007 Gazette 2007/12)**

(54) **DISPOSITIF D'ECOULEMENT MICROFLUIDIQUE AYANT AU MOINS UN CANAL DE LIAISON RELIANT DEUX CANAUX ET PROCEDE POUR DIRIGER OU CONTROLER DES FLUX**

MIKROFLUIDISCHE VORRICHTUNG MIT MINDESTENS EINEM ZWEI KANÄLE VERBINDENDEN VERBINDUNGSKANAL UND VERFAHREN ZUM FÜHREN UND ÜBERPRÜFEN VON FLUIDEN

MICROFLUIDIC DEVICE HAVING AT LEAST ONE CONNECTING CHANNEL LINKING TWO CHANNELS AND METHOD OF DIRECTING AND CONTROLLING FLUIDS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **09.09.2005 FR 0509217**
**21.11.2005 US 738033 P**

(43) Date de publication de la demande:
**18.06.2008 Bulletin 2008/25**

(73) Titulaire: **Rhodia Opérations**
**93306 Aubervilliers (FR)**

(72) Inventeurs:
• **CRISTOBAL, Galder**
**F-33000 Bordeaux (FR)**

• **AJDARI, Armand**
**F-75013 Paris (FR)**
• **JOANICOT, Mathieu**
**F-92290 Chatenay-malabry (FR)**

(74) Mandataire: **Schouller, Jean-Philippe et al**
**Cabinet Lavoix**
**62, rue de Bonnel**
**69448 Lyon Cedex 03 (FR)**

(56) Documents cités:
EP-A- 1 525 919          EP-A2- 1 329 765
WO-A-98/55852          WO-A-02/083291
DE-A1- 10 213 003      US-A- 6 136 272
US-A1- 2003 012 483    US-A1- 2004 099 712
US-B1- 6 494 614

EP 1 931 461 B1

**Description**

La présente invention concerne en particulier un dispositif d'écoulement microfuidique. De façon classique, un tel dispositif d'écoulement microfluidique comprend au moins un microcanal, permettant l'écoulement d'au moins un fluide.

La dimension caractéristique de chaque microcanal, telle que visée par l'invention, est comprise entre quelques micromètres et le millimètre. De manière typique, cette dimension provoque un écoulement sensiblement laminaire au sein du microcanal, avec un nombre de Reynolds inférieur à 1.

Un dispositif d'écoulement microfluidique est connu de l'article « Quantitative analysis of molecular interaction in a microfluidic channel : The T-sensor » (anal. Chem. 1999, 71, 5340-5347) qui sera dénommé ci-après Yager et A1. Ce dispositif d'écoulement comprend deux canaux amont, ainsi qu'un unique canal aval, qui définissent une forme de T. Cette publication décrit la possibilité de faire s'écouler un fluide cible, ainsi qu'un indicateur fluorescent au sein du canal aval, de manière à déterminer la concentration de ce fluide cible par mesure de la fluorescence dans une région de ce canal, où se produit une interdiffusion entre le fluide cible et l'indicateur.

Les techniques de microfluidique sont utilisées pour donner accès de manière simple et/ou rapide et/ou très précise sur des données chimiques ou physico-chimiques. Ces techniques mettent en oeuvre des écoulements de fluides dans des canaux. Les fluides étudiés sont généralement des mélanges de composés chimiques ou biologiques dont on étudie les propriétés en un ou plusieurs points des canaux. L'histoire chimique ou physico-chimique du fluide évolue au cours de leur progression dans les canaux, par simple évolution d'un mélange (cinétiques de réaction, de cristallisation...) au cours du temps, et/ou par mélange dans le dispositif de plusieurs matières. On peut ainsi réaliser des analyses, étudiant des phénomènes de réaction chimique ou physico-chimique ou biologique, concevoir de nouvelles matières à petite échelle et étudier leurs propriétés, ou même fabriquer des composés.

Pour mener ces opérations, on peut manipuler des flux de fluides dans des canaux. On peut par exemple diviser un flux en deux flux qui subiront chacun un traitement et/ou des analyses différentes. On peut réunir deux flux pour créer ou étudier des réactions.

On connaît des dispositifs microfluidiques comprenant des dérivations (ou jonctions) et dans lesquels on effectue des écoulements.

On connaît des écoulements de bouchons (ou "gouttes" ou "plugs") dans des fluides porteurs, comme par exemple décrits dans W02004038363, et des dispositifs pour la mise en oeuvre de tels écoulements.

Il existe un besoin pour améliorer la manipulation des flux dans des dispositifs microfluidiques. Il existe notamment un besoin pour améliorer la manipulation de flux de bouchons, par exemple pour mieux les répartir dans différents canaux, et/ou pour fusionner différents bouchons créant ainsi des mélanges réactionnels, et/ou pour ranger et trier des familles de bouchons et/ou pour s'assurer qu'ils atteignent les destinations dans les canaux qu'on souhaite leur faire atteindre.

Notamment, de manière générale, il existe un besoin constant de l'industrie de développer des produits nouveaux, présentant des propriétés nouvelles, par exemple de nouveaux composés chimiques ou de nouvelles compositions comprenant des nouveaux produits chimiques et/ou de nouvelles associations de produits chimiques. Les transformations physiques et/ou chimiques des produits sont des propriétés importantes pour bon nombre d'applications, qu'il convient bien souvent de tester dans les processus de Recherche et Développement. Il existe un besoin en procédés et installations pour accélérer les processus de Recherche et Développement, par exemple pour tester un plus grand nombre de produits et/ou pour mettre en oeuvre les tests sur de plus petites quantités de produits, et/ou pour mettre en oeuvre les tests de manière plus rapide.

EP-A-1 525 919, sur la base duquel est basé le préambule de la revendication 1, divulgue un dispositif d'écoulement microfluidique dans lequel un canal d'écoulement se divise en plusieurs canaux dérivés qui, à leur extrémité opposée à leur débouché dans le canal d'écoulement, sont reliés les uns aux autres par un canal de liaison commun, formant ainsi entre eux un court-circuit.

US-B-6 494 614 décrit entre autres un agencement microfluidique dans lequel il est prévu un canal d'écoulement qui débouche dans un canal circulaire en forme de boucle. Ce dernier est associé à des canaux secondaires, qui s'étendent depuis la périphérie circulaire de ce canal à la manière de rayons et qui débouchent dans un orifice central commun.

US-A-6 136 272 décrit une plaquette dans laquelle sont ménagés respectivement un canal principal, un canal secondaire, ainsi qu'un canal intermédiaire de liaison.

WO-A-02/083291 divulgue un dispositif pour le reformage catalytique d'hydrocarbures ou d'alcools. Un des agencements décrits dans ce document fait intervenir différentes entrées, communiquant les unes avec les autres par un réseau de microcanaux.

Ceci étant précisé, l'invention se propose de répondre à au moins un des besoins explicités plus haut.

A cet effet, elle a pour objet un dispositif d'écoulement microfluidique, tel que défini à la revendication 1.

D'autres caractéristiques du dispositif selon l'invention sont spécifiées aux revendications dépendantes 2 à 14.

L'invention a également pour objet un procédé pour diriger ou contrôler des flux de matière, de préférence pour manipuler des bouchons, de préférence en réseau, tel que défini à la revendication 15.

D'autres caractéristiques du procédé selon l'invention sont spécifiées aux revendications 16 à 21.

L'invention va être décrite ci-après en référence aux dessins annexés, donnés uniquement à titre d'exemples non limitatifs, dans lesquels :

- la figure 1 est une vue de face, illustrant de façon partielle un dispositif d'écoulement microfluidique conforme à l'invention ;
- la figure 1A est une vue de face, analogue à la figure 1, illustrant plus particulièrement certains éléments constitutifs du dispositif de cette figure 1 ;
- la figure 2 est une vue de face, analogue à la figure 1, illustrant une variante de mise en oeuvre du dispositif de cette figure 1 ;
- la figure 3 est une vue de face, analogue à la figure 2, illustrant une autre variante de mise en oeuvre du dispositif conforme à l'invention ;
- la figure 3A est une vue de face, à plus grande échelle, illustrant des moyens de formation de bouchons, prévus dans la partie amont du dispositif conforme à l'invention
- la figure 4 est une vue de face, analogue aux figures précédentes, illustrant un dispositif d'écoulement conforme à l'invention, présentant une arborescence symétrique ;
- la figure 5 est une vue schématique, illustrant la réalisation d'une arborescence dissymétrique équilibrée d'un dispositif conforme à l'invention ;
- les figures 6A et 6B sont des vues de face, analogues notamment à la figure 4, illustrant deux modes de réalisation d'un dispositif d'écoulement conforme à l'invention, formant une arborescence dissymétrique équilibrée ;
- la figure 7A est un schéma électrique, alors que la figure 7B est une vue de face, illustrant une partie du dispositif d'écoulement conforme à l'invention, qui est analogue de façon hydrodynamique à ce schéma électrique ;
- la figure 8 est une vue de face, analogue à la figure 1, illustrant une variante de réalisation de l'invention ;
- la figure 9 est une vue de face, analogue à la figure 1, illustrant la mise en oeuvre du dispositif illustré à la figure 8 ;
- la figure 10 est une vue de face, analogue à la figure 8, illustrant une variante supplémentaire de réalisation de l'invention ;
- les figures 11 à 13 sont des suites de prises de vue, illustrant la progression de gouttes dans le dispositif de la figure 8 ; et
- la figure 14 est une vue schématique, illustrant un dispositif d'écoulement microfluidique conforme à une variante supplémentaire de réalisation de l'invention.

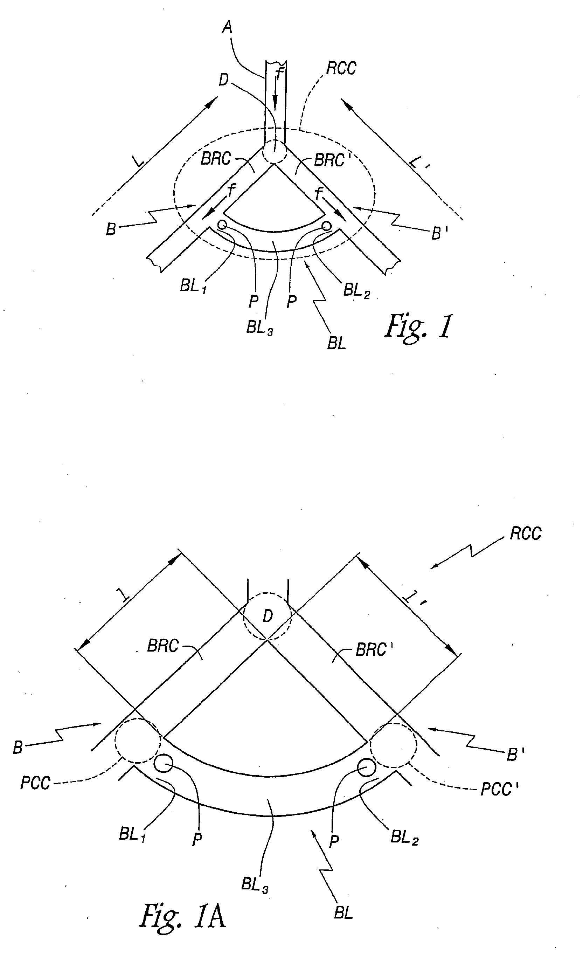

La figure 1 illustre un dispositif d'écoulement microfluidique conforme à l'invention, qui comprend tout d'abord un corps, formant une plaquette, qui n'est pas représenté sur les dessins.

Cette plaquette peut être réalisée de façon connue en soi en poly(dyméthylsiloxane), ou PDMS. Différents microcanaux sont gravés dans cette plaquette, également de manière classique. Cette plaquette possède une longueur typique de 75 mm, une largeur typique de 50 mm, ainsi qu'une épaisseur typique de 1 mm. Par ailleurs, les différents microcanaux évoqués ci-dessus possèdent une section typique comprise entre quelques micromètres et le millimètre, notamment voisine de 50 micromètres. Une autre valeur avantageuse de section est voisine de 150 micromètres.

On retrouve ainsi un canal d'écoulement A, placé en haut de la figure 1, en partie basse duquel est prévue une dérivation D. Au-dessous de celle-ci, on retrouve deux canaux dérivés B et B', qui sont reliés par un canal de liaison BL.

Deux plots P, formant des obstacles, sont prévus au voisinage de l'intersection du canal de liaison BL et de chacun des canaux dérivés B et B'. Ainsi, ce canal de liaison BL peut être divisé en trois tronçons, à savoir tout d'abord deux tronçons d'extrémité $BL_1$ et $BL_2$, dont la section transversale est faible. Par ailleurs, on retrouve une portion médiane $BL_3$, dont la section de passage est à nouveau plus large.

Au sens de l'invention, un canal d'écoulement A est un canal destiné à comprendre un flux unique qui sera divisé en deux flux séparés ou qui provient de deux flux séparés. Dans un mode de fonctionnement divergent le canal d'écoulement A est un canal en amont de la dérivation D. Dans un mode de fonctionnement convergent le canal d'écoulement A est en aval de cette dérivation.

Une "dérivation", ou "jonction", ou "noeud", ou "embranchement", ou "point d'arborescence", désigne un espace où au moins trois canaux débouchent. La dérivation peut par exemple présenter une forme de T ou de Y, plus ou moins évasée.

A une dérivation, un canal amont peut ainsi donner naissance à au moins deux canaux aval. On parle dans ce cas de fonctionnement ou d'écoulement divergent.

A titre d'alternative, à une dérivation, au moins deux canaux amont peuvent donner naissance à un unique canal aval. On parle dans ce cas de fonctionnement ou d'écoulement convergent.

Les canaux dérivés B et B', ou branches dérivées, sont des canaux destinés à comprendre chacun un flux séparé qui sera réuni avec l'autre ou qui provient d'un flux unique divisé pour donner les flux séparés. Dans un mode de fonctionnement divergent les canaux dérivés B et B' sont en aval de la dérivation. Dans un mode de fonctionnement convergent les canaux divisés B et B' sont en amont de la dérivation.

Un canal de liaison BL, ou branche de liaison, est un canal reliant les canaux dérivés entre eux, débouchant sur le canal dérivé B en un point de la longueur de ce canal dérivé, dénommé point de court-circuit PCC, et sur le canal dérivé B' en un point de la longueur de ce canal dérivé B', dénommé point de court-circuit PCC'. Les points de court-circuit désignent chacun un espace où le canal de liaison débouche sur le canal dérivé. On désigne aussi les points de court-circuit par "points de by-pass".

Une branche de réseau à court-circuit BRC ou BRC' , ou "branche de court-circuit" ou "branche court-circuitée" ou "branche de by-pass" ou "segment de court-circuit" ou "segment de by-pass" désigne le segment d'un canal dérivé B ou B' s'étendant de la dérivation D au point où débouche le canal de liaison BL, soit le point de court-circuit PCC ou PCC'. La longueur d'une branche de réseau à court-circuit (à savoir la longueur du segment ou "longueur de court-circuit" ou "longueur de by-pass") est définie comme longueur l pour le canal dérivé B, respectivement l' pour le canal dérivé B'.

Comme illustré plus particulièrement à la figure 1A, un "réseau à court-circuit" RCC ou plus simplement "court-circuit" ou "by-pass", désigne l'ensemble des canaux ou partie des canaux comprenant la dérivation D, le canal de liaison BL, et les branches de réseau à court-circuit BRC et BRC' des canaux dérivés B et B'. De préférence dans le réseau à court-circuit il y a une symétrie locale pour les parties relatives aux canaux dérivés B et B'. Ainsi l est généralement égal à l'.

La longueur du canal d'écoulement A et les longueurs L et L' des canaux dérivés B et B' sont définies comme les longueurs des segments entre la dérivation D et un point où les flux sont créés ou modifiés de manière significative, par exemple une entrée et/ou sortie, un réservoir, une dérivation en amont ou en aval. Ainsi, sur la figure 1, un tel point n'est pas représenté. Dans le cas d'un mode de fonctionnement divergent, les longueurs sont les longueurs entre la dérivation et un point aval tel qu'une autre dérivation aval (pour un dispositif arborescent par exemple) ou un réservoir d'arrêt des écoulements, ou une sortie du dispositif.

Par construction l < L, et l' < L'. De préférence, ces longueurs L ou L' des canaux dérivés B et B' sont bien supérieures aux longueurs l et l' des branches de réseau à court-circuit BRC et BRC'. En particulier, le rapport L/l, ou L'/l', est supérieur à 2 à savoir que le point de court-circuit PCC ou PCC' est situé à moins de la moitié de la longueur L ou L' de chaque canal dérivé B ou B'.

Le dispositif d'écoulement microfluidique conforme à l'invention permet notamment de déterminer des paramètres d'une transformation physique et/ou chimique.

Par transformation, on entend tout type d'interaction susceptible d'intervenir dans un mélange d'au moins deux composants. De façon non limitative, cette transformation peut être une réaction de type chimique et/ou physique, comme par exemple tout type de réaction chimique classique, ainsi qu'également une cristallisation ou une précipitation, ou encore entre autres une modification d'un équilibre liquide/vapeur. De façon générale, au sens de l'invention, une telle transformation est susceptible de mettre en oeuvre des phénomènes chimiques, par échange ou mise en commun d'électrons, des interactions ou répulsions physiques, telles que des liaisons hydrogènes, des interactions électrostatiques, des attractions ou répulsions stériques, des affinités pour différents milieux hydrophiles et/ou hydrophobes, des stabilités de formulation, des floculations ou encore des transferts de phases, par exemple de type liquide/liquide, solide/liquide ou gaz/liquide. Au sens de l'invention, les paramètres d'une telle transformation sont, de manière non limitative, les cinétiques de réaction chimique en milieu homogène ou hétérogène, les conditions permettant d'obtenir un optimum de rendement pour des réactions chimiques, des enthalpies de réactions, des processus temporels de réactions chimiques et physiques, ainsi que des diagrammes de solubilité ou encore de phases.

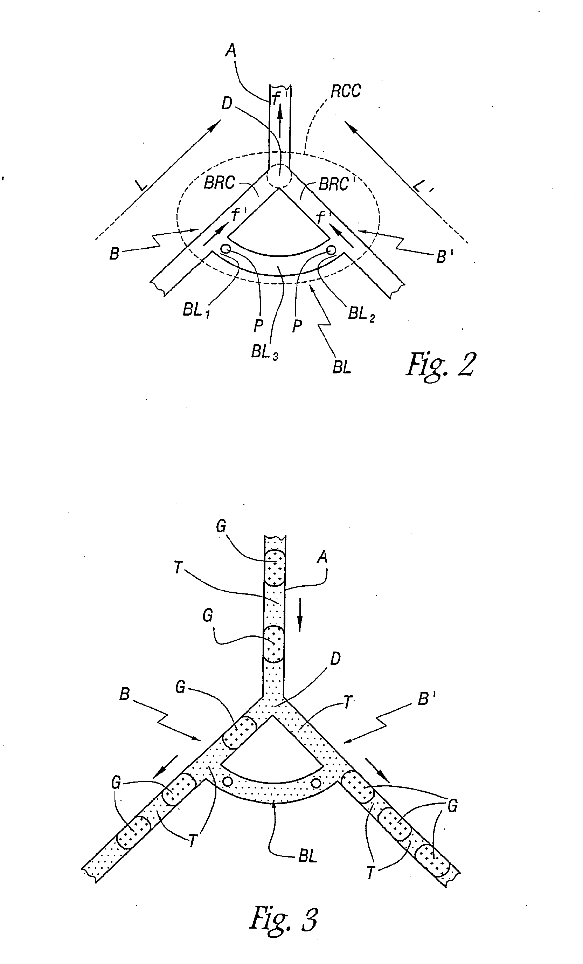

Comme évoqué ci-dessus, les différents fluides s'écoulant dans le dispositif conforme à l'invention sont susceptibles de progresser selon des modes respectivement convergent et divergent, comme illustré aux figures 1 et 2.

Ainsi, sur la figure 1, l'écoulement divergent des fluides est matérialisé par les flèches f. En d'autres termes, le canal d'écoulement A est un canal amont, qui donne naissance aux deux canaux dérivés B et B' placés en aval. Le fluide unique s'écoulant dans le canal A est ainsi divisé en deux flux séparés s'écoulant dans les canaux B et B'.

La figure 2 illustre la solution alternative, de type convergent, pour laquelle l'écoulement du fluide est matérialisé par les flèches f' étant entendu que le dispositif d'écoulement est identique à celui de la figure 1. Dans ce cas, .les canaux dérivés B et B' sont placés en amont, alors que le canal d'écoulement est placé en aval. Ce dernier reçoit l'écoulement d'un fluide unique, qui provient de deux flux séparés s'écoulant respectivement dans les canaux B et B'.

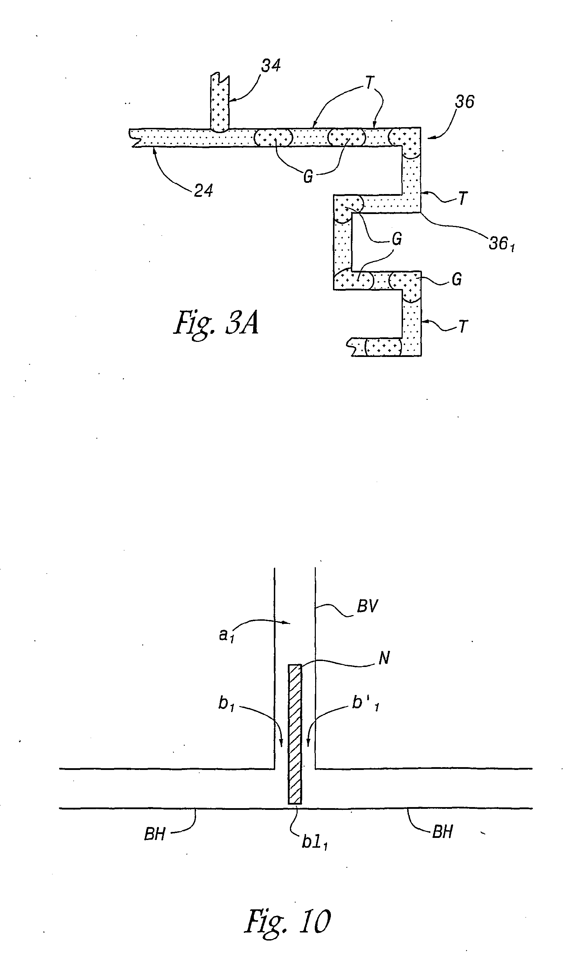

La figure 3 illustre un des modes de réalisation de l'invention, à savoir un écoulement de type divergent, tel que défini ci-dessus, d'un fluide comprenant plusieurs phases. On retrouve ainsi, sur cette figure, une succession de gouttes G, formant des bouchons, et de tronçons T d'une phase porteuse qui s'écoulent dans le canal d'écoulement amont A puis dans les deux canaux dérivés aval B et B'. Ces bouchons sont générés par des moyens de génération de bouchons, qui sont par exemple ceux décrits dans le document WO-2004038363, inclus par référence dans la présente demande.

La figure 3A illustre une autre possibilité de réaliser de tels bouchons. On retrouve tout d'abord un canal amont 34, dans lequel s'écoule un mélange de deux composants, notamment des réactifs, qui sont destinés à former les gouttes G, ou bouchons. Ce mélange est alimenté depuis des entrées non représentées, en aval desquelles s'étendent des microcanaux intermédiaires également non représentés, qui débouchent dans le microcanal amont 34. Etant donné la nature même de ce dernier, en particulier ses dimensions, les deux composants s'y écoulent sensiblement sans subir de mélange. En effet, dans ce microcanal 34, un mélange peut uniquement intervenir par diffusion moléculaire. Dans ces conditions, si ce microcanal 34 est suffisamment court, les molécules des deux composants ne disposent du temps nécessaire pour diffuser, de sorte que les flux ne s'interpénètrent pas. Cependant, il peut être avantageux, à titre de variante non représentée, d'adjoindre un fluide neutre de façon connue en soi.

Par ailleurs, on introduit par une autre entrée, également non représentée, une phase liquide porteuse qui n'est pas miscible avec les réactifs précités. Le débit des deux réactifs est avantageusement compris entre 0,1 microlitre/heure et 1000 microlitres/heure, alors que le débit de la phase porteuse est avantageusement compris entre 0,1 microlitre/heure et 100 000 microlitres/heure.

Cette phase porteuse liquide s'écoule dans un microcanal auxiliaire 24. Etant donné que ces réactifs ne sont pas miscibles avec cette phase porteuse, en aval de la jonction entre les microcanaux 24 et 34, il se forme une succession de gouttes G, constituant des bouchons ou entités dispersées, dont chacune se compose d'un mélange des deux composants précités. Deux gouttes successives sont alors séparées par un tronçon T de la phase porteuse.

Comme le montre la figure 3A, les gouttes G occupent toute la section d'un microcanal aval 36, de sorte que l'ensemble des constituants, à savoir ces gouttes et la phase porteuse, possèdent la même vitesse. Au sein de ce microcanal 36, l'écoulement est ainsi de type bouchon, ou piston.

En amont du microcanal 36, les composants de chaque goutte sont peu, voire pas du tout mélangés. Puis, au fur et à mesure de leur progression, les gouttes G sont soumises à des modifications de leur écoulement intérieur, grâce aux parois de replis $36_1$, dont est pourvu ce microcanal 36 de façon connue en soi. Ce dernier débouche par ailleurs dans le canal d'écoulement A de sorte que, au voisinage de la dérivation D, les composants sont bien mélangés au sein de chaque goutte G.

Au sens de l'invention, les canaux d'écoulement et dérivés sont destinés à recevoir d'écoulement d'un fluide, qui peut comprendre plusieurs phases le long de ces canaux. Des bouchons ou "plugs" ou "gouttes" ou "entités dispersées" sont des phases fluides s'écoulant le long des canaux, occupant substantiellement la largeur des canaux, séparées les unes des autres par un fluide porteur non miscible avec le fluide des bouchons. Par exemple le fluide porteur peut être une phase hydrophobe, les fluides des bouchons étant des phases aqueuses. Le fluide porteur peut aussi être une phase aqueuse, les fluides des bouchons étant des phases hydrophobes. Le fluide s'écoulant dans les canaux peut notamment être une succession alternée de bouchons et de tronçons de fluide porteur. Ainsi le fluide peut être assimilé à un chapelet continu de bouchons.

Si la succession est irrégulière ou discontinue, laissant des espaces de fluide porteur seul et des espaces de succession alternée, on peut parler de trains de bouchons ou de trains de gouttes. Le fluide peut comprendre plusieurs familles de bouchons. Une famille de bouchons est définie comme un ensemble de bouchons ayant la même provenance et/ou des compositions identiques mais pouvant évoluer par réaction chimique, biologique ou physico-chimique. Ainsi le fluide d'écoulement dans les canaux peut être une succession alternée de fluide porteur et de bouchons, les bouchons pouvant eux-mêmes définir une alternance régulière ou non de plusieurs familles de bouchons.

Alternance à une famille de bouchons:

... - porteur - bouchon - porteur - bouchon - porteur - bouchon -...

Alternance à deux familles de bouchons:

... - porteur - bouchon de type 1 - porteur - bouchon de type 2 - porteur - bouchon de type 1 - porteur - bouchon de type 2 - porteur - bouchon de type 1- ...

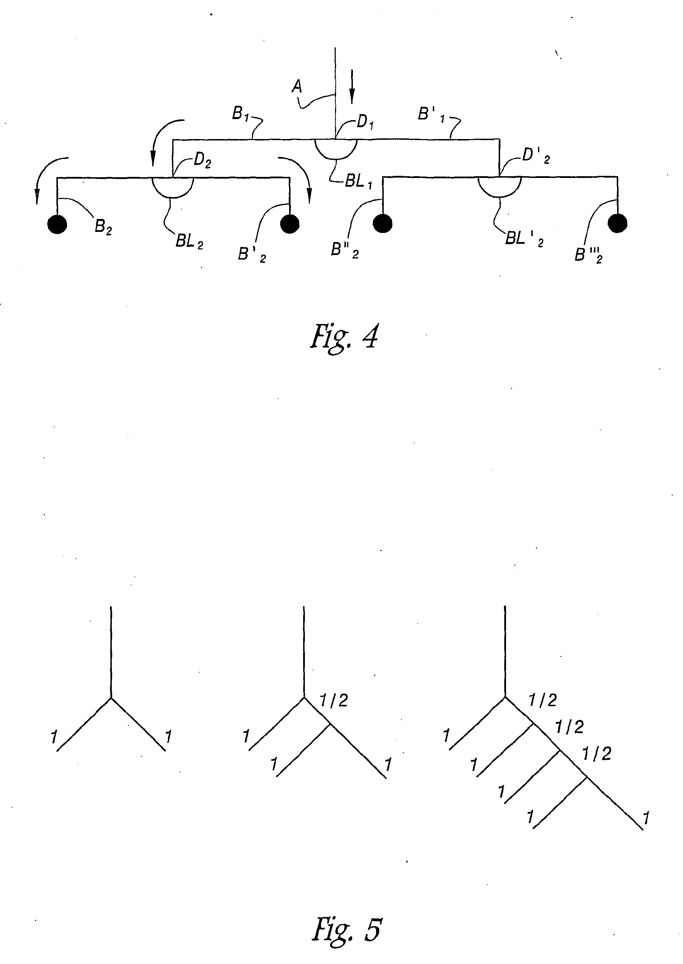

L'agencement décrit en référence aux figures précédentes comprend une seule dérivation, à partir de laquelle s'étendent deux canaux dérivés, dits d'ordre 1, qui sont référencés $B_1$ et $B'_1$ sur la figure 4, la dérivation et le canal de liaison étant référencés $D_1$ et $BL_1$. Comme le montre cette figure, on peut prévoir que chaque canal dérivé d'ordre 1 débouche dans une dérivation correspondante, dite d'ordre 2, qui est notée $D_2$ ou $D'_2$. Dans ce cas, deux canaux dérivés d'ordre 2, référencés $B_2$ à $B'''_2$, s'étendent à partir de chaque dérivation d'ordre 2, étant entendu que deux canaux de liaison supplémentaires $BL_2$ et $BL'_2$, relient chaque paire de canaux dérivés d'ordre 2.

De façon non représentée, on peut prévoir que chaque canal dérivé d'ordre 2 se divise lui-même en deux canaux dérivés d'ordre 3, qui sont reliés par un canal de liaison supplémentaire. De façon itérative, on peut réaliser une arborescence symétrique dont les canaux d'ordre maximal présentent un ordre supérieur à 4, de préférence à 7.

L'agencement de cette figure 4 est symétrique par rapport à un axe vertical médian de la feuille. Au sens de l'invention, le terme « symétrique » signifie que le dessin formé par ces canaux est symétrique, notamment par rapport à un axe. De préférence, la dimension transversale de ces canaux est également symétrique et, encore de préférence, la nature des écoulements de fluide dans ces canaux est également symétrique.

Conformément à l'invention, on peut également prévoir de réaliser une arborescence de type dissymétrique, du fait de la nature géométrique et/ou des dimensions transversales des différents canaux. En d'autres termes, un agencement peut être dissymétrique au sens de l'invention, quand bien même les différents canaux dérivés sont géométriquement symétriques par rapport à un axe vertical médian, dans la mesure où les sections de passage des canaux d'un même ordre sont différentes.

On a trouvé qu'à chaque dérivation (ou jonction), une équipartition des débits est favorable. On a trouvé que le comportement des bouchons est souvent incontrôlé, dans la mesure où ils suivent toujours les débits les plus importants. Si à une jonction, il n'y a pas cette équipartition, les bouchons suivront le débit le plus fort et les chances d'observer des bouchons dans les derniers canaux du système et d'accéder aux temps de séjour longs sont réduites.

Dans le cas d'une arborescence symétrique, telle celle de la figure 4, l'équipartition peut être assurée par la symétrie du système. La répartition des bouchons reste toutefois faiblement contrôlée. Pour faire fonctionner un dispositif dissymétrique, on a trouvé qu'une équipartition, souhaitable, peut être obtenue en équilibrant l'arborescence. Cet équilibrage est en fait analogue à celui d'un circuit en électrocinétique quand on égalise en un noeud les résistances des branches qui en partent.

La construction d'une arborescence dissymétrique équilibrée est obtenue par le principe suivant: toutes les sorties ont une longueur fixée identique et tous les noeuds sont reliés entre eux par des canaux de longueur moitié (voir figure 5). Sur cette figure, les longueurs sont schématiquement affectées des références 1/2 ou 1.

On peut évaluer quels temps de séjour un tel dispositif peut nous permettre d'atteindre et les comparer avec un canal linéaire.

A la p-ième sortie, le temps de séjour atteint est donné par la formule suivante :

$$t_p = \sum_{q=1}^{p-1}\left(\frac{L/2}{v/2^q}\right) + \frac{L}{v/2^p} = \frac{L}{v}\cdot\left(\sum_{q=1}^{p-1}\left(2^{q-1}\right) + 2^p\right) = \frac{L}{v}\cdot\left(2^{p-1} - 1 + 2^p\right) = \left(3.2^{p-1} - 1\right)\cdot\frac{L}{v} \text{ On}$$

On observe que les temps atteints ne varient plus linéairement le long du canal mais de façon exponentielle ce qui permet d'atteindre de longs temps de séjours sans rencontrer de problèmes d'encombrement. On peut d'ailleurs dresser le tableau de comparaison suivant (tableau 1):

TABLEAU 1. TEMPS DE SÉJOUR MAXIMAUX DANS UN CIRCUIT LINÉAIRE ET DANS UNE ARBORESCENCE DISSYMÉTRIQUE ET GAIN.

| Nombre d'intersections | 1 | 2 | 3 | 4 | 5 | 6 | 7 | 8 |
|---|---|---|---|---|---|---|---|---|
| Longueur totale du système | 2L | 7L/2 | 5L | 13L/2 | 8L | 19L/2 | 11L | 25L/2 |
| Temps de séjour maximal pour un circuit linéaire de cette longueur | 2L/$v$ | 7L/2$v$ | 5L/$v$ | 13L/2$v$ | 8L/$v$ | 19L/2$v$ | 11L/$v$ | 25L/2$v$ |
| Temps de séjour à la dernière sortie | 2/$v$ | 5L/$v$ | 11 /$v$ | 23L/$v$ | 47L/$v$ | 95L/$v$ | 191L/$v$ | 383L/$v$ |
| Gain (rapport des temps maximaux de séjour) | 1 | 1,43 | 2,2 | 3,54 | 5,88 | 10 | 17,36 | 30,64 |

Intérêt et principe du by-pass

Le schéma précédent, illustré à la figure 5, semble assurer à chaque intersection une répartition égale du débit total amont entre les deux branches aval si l'on étudie un système monophasique.

Toutefois on a trouvé que sur des systèmes diphasiques, l'équipartition n'est pas toujours assurée, au moins localement:

- Chaque goutte, ou bouchon, se comporte en fait comme une résistance hydrodynamique mobile. Quand, à une jonction, une goutte se dirige vers une branche de l'arborescence, elle augmente alors la résistance totale de cette branche. La goutte suivante devrait donc en théorie opter pour l'autre branche, dont la résistance est plus faible.
- Cependant, ce fonctionnement idéal est difficile à obtenir dans la réalité pour différentes raisons:

  - des défauts non mesurables lors de la fabrication peuvent entraîner un déséquilibre entre les résistances hydrodynamiques des deux branches en parallèle.
  - des fluctuations dans la dynamique du système (élasticité des canaux, pression capillaire en sortie, etc) peuvent être une autre source de déséquilibre.

On a trouvé que, lorsque les résistances hydrodynamiques des deux branches sont égales, les gouttes arrivant à la jonction ne se repartissent pas de façon 1:1 dans les deux branches mais d'une façon chaotique. La répartition des gouttes se fait par des trains de gouttes, généralement de manière aléatoire et irrégulière.

On a trouvé qu'il convient donc de trouver un système qui amplifie l'augmentation de résistance hydrodynamique induite par l'arrivée d'une goutte dans une branche de manière à ce que la goutte suivante choisisse l'autre branche.

Partant de cette idée, le système de l'invention qu'on appelle «by-pass» a le rôle par exemple d'accentuer l'influence de la dernière goutte passée afin qu'elle repousse la suivante dans l'autre branche.

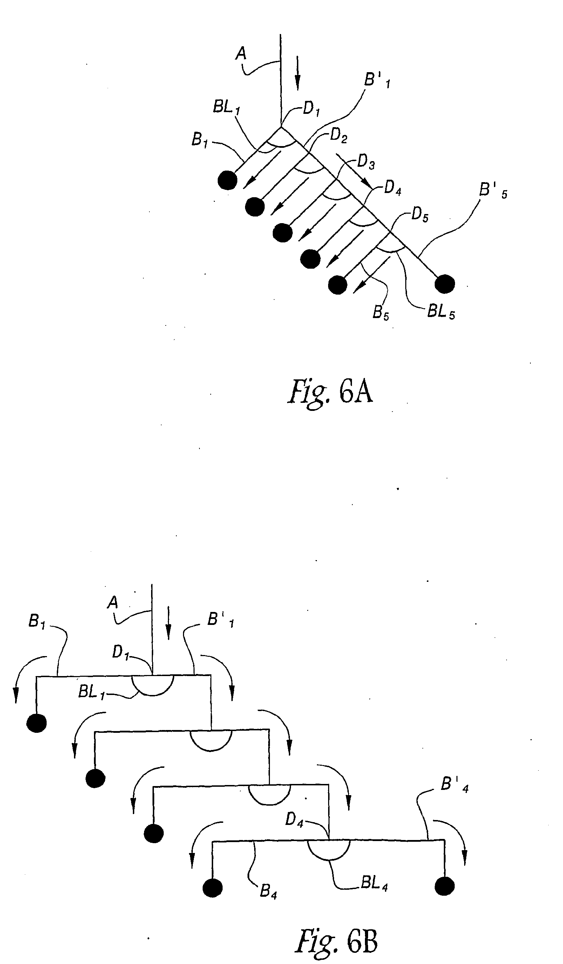

La figure 6A illustre un dispositif dissymétrique, tel qu'obtenu selon la construction de la figure 5 qui intègre des canaux de liaison conformes à l'invention. Ainsi, au niveau de chaque dérivation, on retrouve un tel canal de liaison, qui relie deux branches dérivées d'un même ordre. On retrouve donc le canal d'écoulement A, ici placé en amont, différentes dérivations $D_1$ à $D_5$, différents canaux dérivés d'ordre 1 à 5, $B_1$ et $B'_1$ à $B_5$ et $B'_5$, ainsi que des canaux de liaison $BL_1$ à $BL_5$.

La figure 6B illustre une variante de réalisation de l'arborescence de la figure 6A. Ainsi, sur cette figure 6B, les canaux dérivés ne sont pas rectilignes comme sur la figure 6A, mais présentent globalement une forme de L. Comme précédemment, deux canaux dérivés d'un même ordre sont reliés par un canal de liaison respectif.

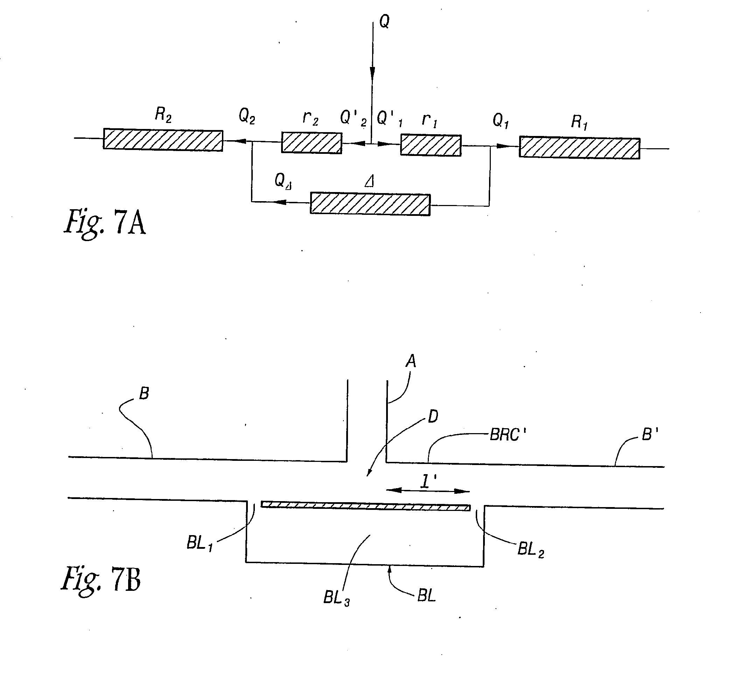

Afin de mieux comprendre comment le système de l'invention peut fonctionner, on peut encore avoir recours à une analogie avec l'électrocinétique. A la figure 7A, on a représenté un équivalent électrique d'un dispositif d'écoulement microfluidique conforme à l'invention, illustré à la figure 7B.

Le dispositif de figure 7B, qui correspond à celui de la figure 1, a été modifié quant à sa forme, de manière à mettre en exergue l'analogie avec le schéma électrique de la figure 7A. Sur cette figure 7B, on retrouve le canal d'écoulement A, la dérivation D, les deux canaux dérivés B et B', ainsi que le canal de liaison BL. On retrouve également les trois parties du canal de liaison BL, à savoir les deux tronçons d'extrémité $BL_1$ et $BL_2$, dont la section transversale est faible, de façon à empêcher le passage de bouchons tels que ceux illustrés à la figure 3. On retrouve enfin la portion médiane $BL_3$, dont la section de passage est à nouveau plus large, de manière à présenter une faible résistance hydrodynamique. Sur cette figure 7B, on a également noté le longueur l' de la branche de réseau court-circuit BRC'.

- Si l'on écrit pour le circuit de la figure 7A la loi des mailles, on a :

$$-R_2 Q_2 - \Delta Q_\Delta + R_1 Q_1 = 0 \quad \text{soit} \quad Q_\Delta = \frac{R_1 Q_1 - R_2 Q_2}{\Delta}$$

et

$$r_1 Q'_1 - r_2 Q'_2 = -\Delta Q_\Delta$$

- Par ailleurs, la loi des noeuds donne $Q_1 = Q'_1 - Q_\Delta$ et $Q_2 = Q'_2 + Q_\Delta$.

On tire par des calculs simples de ces quatre équations l'expression du rapport des débits à la jonction :

$$\frac{Q_1^{'}}{Q_2^{'}} = \frac{r_2 + \dfrac{\Delta R_2}{\Delta + R_1^{'} + R_2}}{r_1 + \dfrac{\Delta R_1}{\Delta + R_1 + R_2}} = \frac{r_2\left(\Delta + R_1 + R_2\right) + \Delta R_2}{r_1\left(\Delta + R_1 + R_2\right) + \Delta R_1}$$

On constate alors que sans dérivation ($\Delta$ infini),

$$\frac{Q_1^{'}}{Q_2^{'}} = \frac{Q_1}{Q_2} = \frac{R_2}{R_1} \quad .$$

Avec une dérivation de résistance très faible, c'est-à-dire telle que $\Delta \ll R_1, R_2$, on a en revanche :

$$\frac{Q_1^{'}}{Q_2^{'}} = \frac{Q_1}{Q_2} = \frac{r_2}{r_1}$$

Par conséquent, s'il y a plus de gouttes dans le tronçon $r_1$, que dans le tronçon $r_2$, on aura alors $r_1 > r_2$ et donc $Q_1^{'} > Q_2^{'}$, ce qui tend à emporter la goutte suivante vers la deuxième branche.

Il faut par ailleurs noter que le mécanisme est assez indépendant de ce qui se passe en aval, au-delà du by-pass. Si l'on dérive en effet l'expression du rapport des débits de sortie respectivement par rapport à $r_2$ et $R_2$, on obtient :

$$\frac{d}{dr_2}\left(\frac{Q_1^{'}}{Q_2^{'}}\right) = \frac{\left(\Delta + R_1 + R_2\right)}{r_1\left(\Delta + R_1 + R_2\right) + \Delta R_1} \quad \text{et} \quad \frac{d}{dR_2}\left(\frac{Q_1^{'}}{Q_2^{'}}\right) = \frac{\Delta}{r_1\left(\Delta + R_1 + R_2\right) + \Delta R_1}$$

En se plaçant dans le cas $\Delta \ll R_1, R_2$ et en supposant nos branches équilibrées i.e. $R_1 = R_2 = R$ et $r_1 = r_2 = r$, on a alors :

$$\frac{d}{dr_2}\left(\frac{Q_1^{'}}{Q_2^{'}}\right) = \frac{2}{2r + \Delta} \quad \text{et} \quad \frac{d}{dR_2}\left(\frac{Q_1^{'}}{Q_2^{'}}\right) = \frac{\Delta}{(2r + \Delta)R}$$

Ainsi, $\dfrac{\dfrac{d}{dr_2}\left(\dfrac{Q_1^{'}}{Q_2^{'}}\right)}{\dfrac{d}{dR_2}\left(\dfrac{Q_1^{'}}{Q_2^{'}}\right)} = \dfrac{2R}{\Delta} \gg 1$ ce qui signifie que l'augmentation de la résistance hydrodynamique d'une branche induite par la présence d'une goutte donnée dans cette branche aura un effet négligeable sur la répartition des débits à la jonction, une fois que cette goutte aura dépassé la dérivation.

Détails de l'invention

### 1) Dessin des canaux

On peut opter pour une géométrie d'intersection en Y dans laquelle les deux branches filles, c'est-à-dire les canaux dérivés, forment un angle droit. Si les effets inertiels sont normalement négligeables, on observe néanmoins qu'une configuration en T favorise une stagnation des gouttes venant du canal d'écoulement père à la jonction, ce qui favorise la coalescence. En revanche, la configuration en Y réduit visiblement le temps de décision des gouttes pour l'une ou l'autre des branches filles.

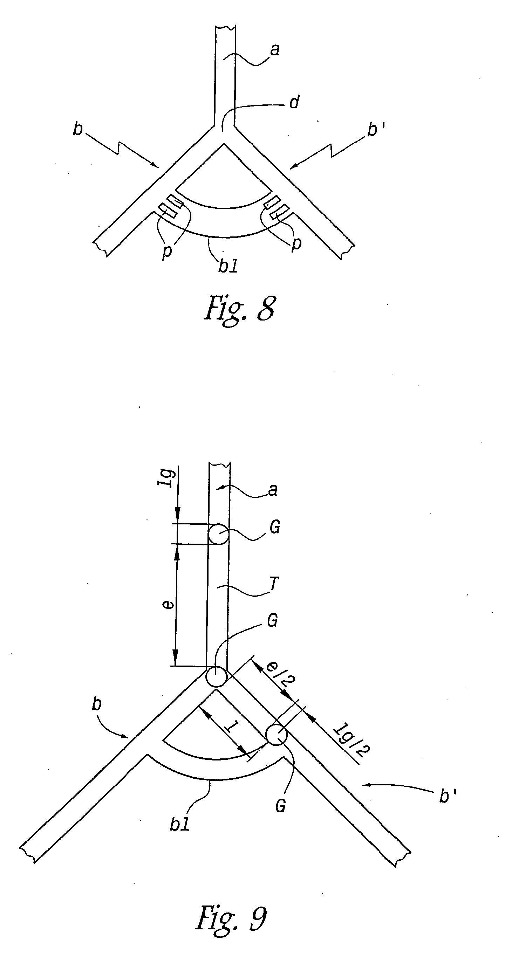

A ce modèle d'intersection, on ajoute un canal de liaison (by-pass), l'agencement indiqué sur la figure 8 remplissant à la fois les conditions mentionnées précédemment et sortant bien à la lithographie. Cet agencement constitue un exemple et n'est pas limitatif. On retrouve un canal d'écoulement père $\underline{a}$, deux canaux dérivés $\underline{b}$ et $\underline{b}'$ reliés par un canal de liaison bl, qui définissent une dérivation $\underline{d}$.

La section transversale du canal de liaison est analogue à celle des deux canaux dérivés. Cependant, à ses deux extrémité, c'est-à-dire au voisinage de son intersection avec chacun de ces canaux dérivés, ce canal de liaison présente une section transversale sensiblement inférieure à celle des canaux dérivés précités.

A cet effet, deux paires de plots $\underline{p}$, formant des obstacles, sont prévus au voisinage de l'intersection du canal de liaison et de chacun des canaux dérivés. Cependant, à titre de variante, on peut envisager d'autres moyens permettant de réduire localement la section transversale de ce canal de liaison. Ainsi, à titre d'exemple' non limitatif, ce dernier peut être pourvu de deux goulets d'étranglement, à chacune de ses extrémités.

### 2) Dimensionnement du by-pass

La largeur des canaux peut par exemple être de 150 $\mu$m.

On peut choisir des dimensions du by-pass comme suit.

Pour que la dérivation fonctionne de manière optimale on préfère que, à chaque fois qu'une goutte arrive à une intersection, celle qui la précède n'ait pas encore dépassé la dérivation. En référence à la figure 9, si l'on note donc lg la longueur d'une goutte et $\underline{e}$ l'espacement mesuré bord à bord entre deux gouttes, il vient donc une première condition sur la longueur $\underline{l}$ de la branche de réseau à court-circuit brc, comprise par conséquent entre l'intersection et la dérivation.

L'huile se répartissant à égalité entre les deux branches dans une arborescence équilibrée, la distance bord à bord entre la goutte à la jonction et celle qui va dépasser bientôt la dérivation est égale à la moitié de l'espacement initial $\underline{e}$ entre ces gouttes. Pour que le by-pass fonctionne de manière optimale, on préfère donc avoir une longueur $\underline{l}$ plus grande que la somme $\underline{e}/2 + \text{lg}/2$, sans quoi la goutte en aval ne bouche plus le canal et n'a plus d'effet aussi important sur l'autre.

Par ailleurs, on peut souhaiter fonctionner avec des gouttes suffisamment éloignées pour limiter les phénomènes de coalescence si de tels phénomènes ne sont pas désirés. Pour cela, on peut choisir $\underline{l}$ de manière à ce qu'il n'y ait qu'une goutte entre l'intersection et la dérivation dans une même branche. Ceci est assuré quand l'avant-dernière goutte passée a dépassé la dérivation, c'est-à-dire quand $\underline{e} + \text{lg}$ est supérieur à $\underline{l}$.

Pour résumer, on peut préférer chercher $\underline{l}$ de manière à avoir

$$(\underline{e} + \text{lg}) \, / \, 2 \leq \underline{l} \leq \underline{e} + \text{lg}.$$

Or, les gouttes que l'on manipule ont généralement une longueur d'au moins 150 $\mu$m afin qu'elles occupent toute la largeur du canal et ne suivent pas les lignes de courant sans pour autant dépasser la limite de Rayleigh-Plateau à savoir $\pi.w$ où $w$ désigne la largeur du canal sans quoi elles casseraient à toutes les intersections quelle que soit leur vitesse. La taille typique des gouttes peut donc être de l'ordre de 200 $\mu$m. Quant à l'espacement, il est de préférence au moins égal à la longueur d'une goutte.

On peut fixer la longueur $\underline{l}$ à 450 $\mu$m. A moins de se placer dans le cas de gouttes petites et rapprochées, on peut ainsi éviter d'avoir trop de gouttes entre la jonction et la dérivation. Ce choix peut permettre également de faire varier l'espacement jusqu'à cinq fois la longueur d'une goutte (pour les.plus petites).

La figure 10 illustre une variante supplémentaire de réalisation de l'invention. Sur cette figure, on retrouve un agencement en forme de T, présentant ainsi une branche verticale BV et deux branches horizontales BH, en référence à cette figure.

L'extrémité de la branche verticale, adjacente à ces branches horizontales, est pourvue d'une nervure N, qui correspond par exemple à une partie non gravée de la plaquette, dans laquelle sont réalisés les canaux.

Cette nervure N permet ainsi de définir deux canaux dérivés $\underline{b}_1$ et $\underline{b}'_1$ au sens de l'invention, dont chacun comprend l'extrémité de la branche verticale, située au-dessous de l'insert, ainsi qu'une branche horizontale correspondante. Par ailleurs, l'extrémité inférieure de la nervure définit, avec la paroi en regard des branches horizontales, un canal de liaison $bl_1$ conforme à l'invention, alors que le canal d'écoulement $\underline{a}_1$ est formé par la partie supérieure de la branche verticale.

Les dimensions de la nervure N sont telles que les canaux dérivés $\underline{b}_1$ et $\underline{b'}_1$ autorisent le passage de bouchons, tels que des gouttes. En revanche, cette nervure N est suffisamment proche des parois en regard des branches horizontales BH, de sorte que le canal de liaison $bl_1$ présente des dimensions telles qu'elles empêchent le passage de ces bouchons le long de ce canal de liaison.

*3) Diagramme* de *fonctionnement* du *by-pass*

La présence du canal de liaison appartenant au "by-pass" de l'invention peut conduire aux fonctionnements suivants:

a) Cassure des gouttes

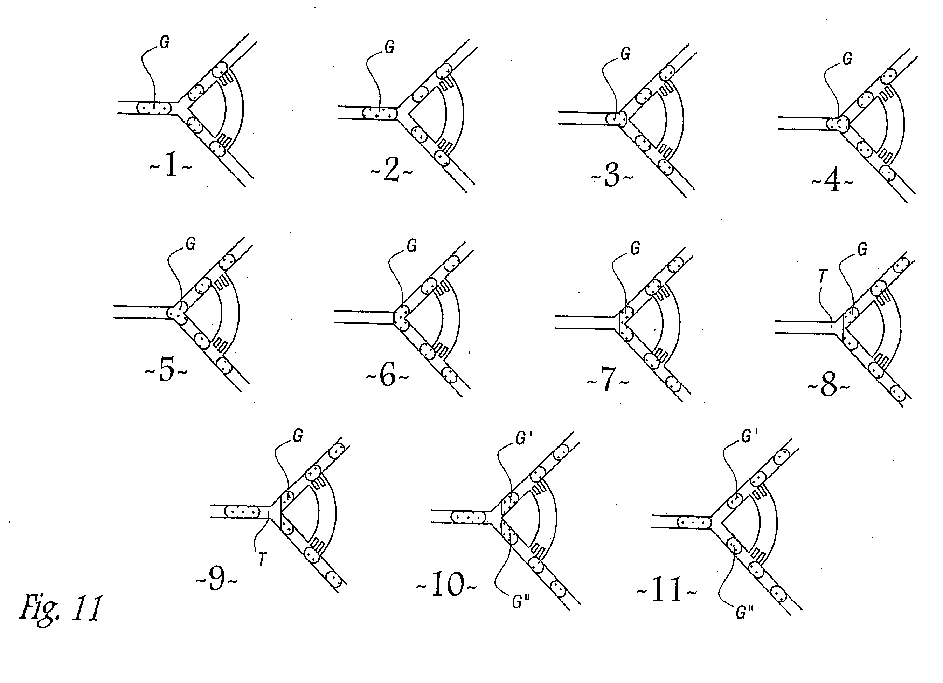

Un certain nombre de gouttes, en particulier les plus grosses ou bien alors des gouttes plus petites mais arrivant à grande vitesse à la jonction, peuvent venir se briser en deux plus petites gouttes à l'intersection, ou jonction, ou dérivation. Les prises de vue de la figure 11 montrent les différentes étapes de ce phénomène pour un mode d'écoulement de type divergent: la goutte G sort son nez dans l'intersection et celui-ci s'aplatit (photos 1 à 4), puis elle change d'axe principal et s'étale verticalement (photos 5 à 7). Le flux de fluide porteur T (par exemple un fluide de type huile) venant de l'amont écrase alors la goutte sur la pointe de la jonction (photos 8 et 9) réduisant progressivement sa largeur jusqu'à ce qu'elle casse, donnant ainsi naissance à deux gouttes G' et G" plus petites (photos 10 et 11).

Les cassures peuvent en particulier survenir dans un mode d'écoulement de type divergent.

b) Distribution selon un rythme régulier

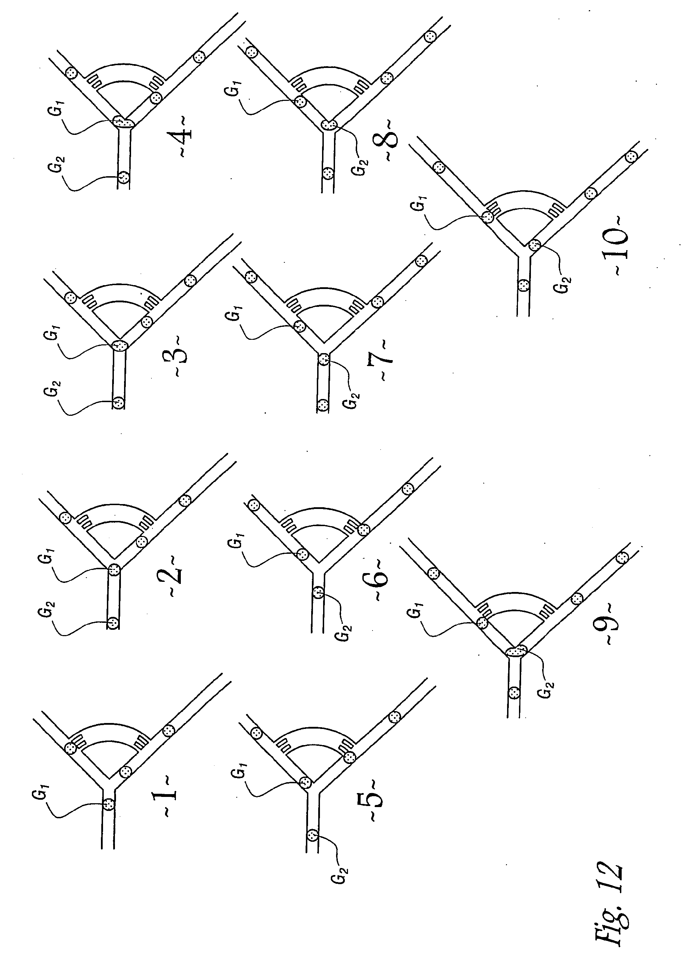

Ce régime peut être caractérisé par un fonctionnement idéal du by-pass: deux gouttes successives $G_1$ et $G_2$ choisissent systématiquement de continuer leur chemin dans une branche différente à l'intersection. Les photos de la figure 12 montrent les différentes étapes de cette stricte alternance dans la répartition des gouttes pour un mode d'écoulement de type divergent.

La distribution selon un rythme régulier peut en particulier survenir dans un mode d'écoulement de type divergent.

c) Coalescence

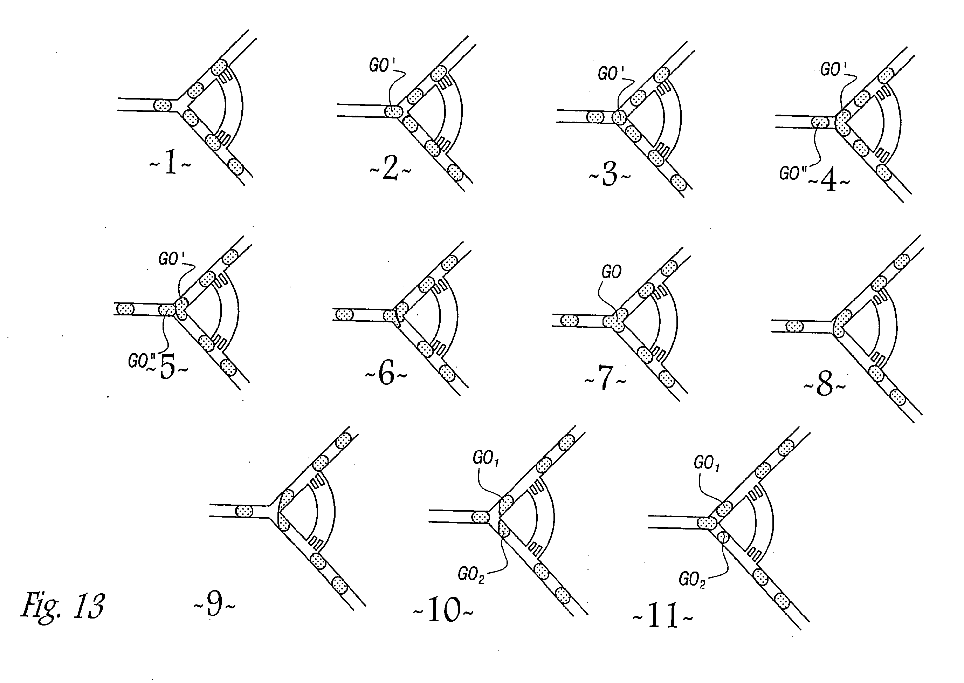

On peut observer également dans un certain nombre de cas des coalescences à la jonction. Ces coalescences entraînent une extension telle de la goutte qu'elles peuvent être suivies d'une cassure de la goutte. Les photos de la figure 13 montrent les différentes étapes de coalescence puis cassure pour un mode d'écoulement de type divergent. Ainsi, les deux gouttes initiales GO' et GO" coalescent pour former une unique goutte GO, qui se casse ensuite en deux gouttes $GO_1$ et $GO_2$.

La coalescence peut en particulier survenir dans un mode d'écoulement de type divergent. Elle peut également survenir dans un mode de fonctionnement de type convergent. Pour les modes de fonctionnement de type divergent, la coalescence peut être un mode de réalisation préféré.

Selon un mode de réalisation avantageux, en mode d'écoulement convergent, on met en oeuvre des rapports *(espacement entre les gouttes) / (longueur du by-pass l) compris entre 1 et 2.* Ce mode est particulièrement préféré pour mettre en oeuvre une distribution selon un rythme régulier 1-1.

Sans vouloir être lié à une théorie, on pense que cette distribution s'explique comme suit: Si une goutte est séparée dans le canal d'écoulement A d'une distance $\underline{e}$ de celle qui la précède avant la dérivation, ou jonction, ou intersection, une fois qu'elle sera à la dérivation, elle ne sera plus qu'à une distance $\underline{e}/2$ d'elle si le volume de fluide porteur entre les deux gouttes se répartit équitablement entre les deux canaux dérivés, par exemple du fait d'un équilibrage de l'arborescence. Quand l'espacement $\underline{e}$ entre les gouttes a une longueur $\underline{l}$ de by-pass ($\underline{e}=\underline{l}$), la goutte qui arrive à la dérivation voit la goutte précédente au milieu d'une des deux branches du by-pass et voit celle d'avant sortir à ce moment précis de l'autre branche du by-pass. Celui-ci peut alors fonctionner et provoquer l'écoulement de la goutte dans la branche maintenant libérée. Quand l'espacement a deux longueurs de by-pass ($\underline{e}=2*\underline{l}$), la goutte qui arrive à la jonction voit la goutte précédente sur le point de sortir d'une branche du by-pass mais bloquant encore cette branche tandis que la goutte d'avant a depuis longtemps dépassé la dérivation. Le by-pass peut encore fonctionner et expédier la goutte dans la branche libre de toute goutte.

Selon un autre mode de réalisation, en mode d'écoulement convergent, on met en oeuvre des rapports *(es-*

*pacement entre les gouttes) / (longueur du by-pass l)* d'environ 0,5. Il y a alors exactement la place pour deux gouttes dans une branche du by-pass et si l'on ne va pas trop vite, on obtient un bon régime avec une goutte alternativement à gauche et à droite.

Selon un autre mode de réalisation, en mode d'écoulement convergent, on met en oeuvre des rapports *(espacement entre les gouttes) / (longueur du by-pass l)* inférieurs à 0,5, de préférence avec des écoulements à relativement faible vitesse. Dans ce mode de réalisation la coalescence domine.

Sans vouloir être lié à une théorie, on pense que cela s'explique comme suit: le risque de coalescence est plus fort quand les gouttes sont proches mais une faible vitesse joue aussi car alors, les gouttes, qui ont l'habitude de se rouler les unes sur les autres quand elles subissent une trop grande promiscuité, vont se retrouver d'autant plus longtemps en contact qu'elles sont lentes. Le fluide porteur qui les sépare et empêche momentanément leur coalescence a alors le temps d'être évacué et les gouttes peuvent coalescer.

Quand on augmente la vitesse et pour des espacements plus grands les gouttes ont plutôt tendance à se casser. En augmentant la vitesse, on entraîne une plus grande extension de la goutte à l'intersection et on accroît le risque d'une cassure comme on l'a décrit dans la première partie de la description.

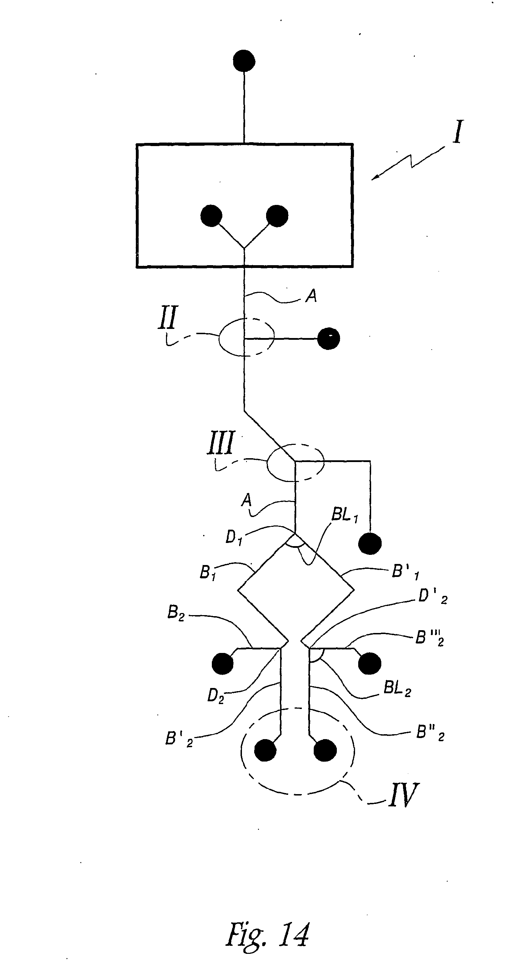

En référence à la figure 14, on va maintenant évaluer l'efficacité du by-pass en comparant la sortie d'une jonction « by-passée » avec celle d'une jonction non « by-passée » lorsqu'elles sont alimentées avec le même type de gouttes, en termes de taille, d'espacement et de vitesse.

Cette figure 14 illustre un canal d'écoulement A, placé en aval d'une zone I, permettant de manière connue en soi de produire des gouttes. Par conséquent, ce canal A reçoit une succession de gouttes et de tronçons de phases porteuses, comme illustré à la figure 3.

Puis, dans une zone II, on ajoute de façon connue en soi de l'huile, afin de séparer ces gouttes et, dans une zone III, on procède à une cassure de ces gouttes, de manière également connue en soi. Ce canal d'écoulement A débouche alors dans une première dérivation $D_1$, en aval de laquelle on retrouve deux canaux dérivés au sens de l'invention, notés $B_1$ et $B'_1$, qui sont reliés par un canal de liaison $BL_1$.

Le canal dérivé $B_1$ débouche à son tour dans une seconde dérivation $D_2$, en aval de laquelle on retrouve deux canaux dérivés $B_2$ et $B'_2$ d'ordre 2. On notera cependant que ces deux canaux dérivés ne sont pas reliés par l'intermédiaire d'un canal de liaison, au sens de l'invention. L'autre canal dérivé d'ordre 1 $B'_1$ débouche dans une dérivation d'ordre 2 $D'_2$, en aval de laquelle on retrouve deux autres canaux dérivés d'ordre 2, notés $B''_2$ et $B'''_2$. On notera que ces derniers sont reliés par un canal de liaison d'ordre 2 $BL_2$, contrairement aux deux autres canaux dérivés $B_2$ et $B'_2$.

Les deux canaux dérivés $B'_2$ et $B''_2$, dont le premier n'a pas fait l'objet d'un « by-pass » au sens de l'invention et dont l'autre a fait l'objet d'un « by-pass » au sens de l'invention, s'étendent de façon adjacente dans une zone d'observation IV, qui peut être observée au moyen d'une caméra de type approprié.

Cette observation démontre l'efficacité du by-pass de l'invention. Ainsi, dans Le canal dérivé by-passé $B''_2$, on obtient une répartition 1:1 presque parfaite, alors que des trains de gouttes circulent dans le canal non by-passé $B'_2$.

Le dispositif d'écoulement microfluidique conforme à l'invention peut, de manière non représentée, être pourvu de moyens d'analyse des différents fluides qui s'y écoulent, en particulier des bouchons. Ces moyens d'analyse peuvent être de nature optique, notamment un analyseur Raman, à infrarouge ou encore à fluorescence. Ce dispositif peut également comprendre des moyens permettant d'imposer un gradient d'au moins une condition opératoire, dans au moins un canal dérivé.

De façon également non représentée, on peut effectuer des analyses des différents bouchons, en particulier quand ceux-ci sont formés d'un mélange, dans des canaux dérivés d'ordres différents. A partir de cette étape d'analyse, on peut déduire par exemple des paramètres cinétiques de la transformation intervenant entre les composants des bouchons, en particulier une constante cinétique. Dans le cas où, comme évoqué ci-dessus, on applique un gradient d'au moins une conditions opératoire, il est possible de détecter l'apparition de cristaux ou d'arrangements spatiaux différents dans les canaux dérivés soumis à ce gradient. Dans ce cas, il est possible de déduire un diagramme de solubilité ou un diagramme de phases.

## Revendications

1. Dispositif d'écoulement microfluidique, comprenant:

   - au moins un canal d'écoulement (A) débouchant dans une première dérivation ($D_1$) qui se divise en au moins deux canaux dérivés d'ordre 1 (B1, $B'_1$), et
   - un canal de liaison d'ordre 1 ($BL_1$) reliant les deux canaux dérivés d'ordre 1, et débouchant sur chaque canal dérivé d'ordre 1 à un point de court-circuit,

   **caractérisé en ce qu'**au moins un ($B_1$) des canaux dérivés d'ordre 1 débouche sur une deuxième dérivation ($D_2$)

se divisant en au moins deux canaux dérivés d'ordre 2 (B$_2$, B'$_2$), et **en ce que** le point de court-circuit associé à chaque canal dérivé d'ordre 1 (B$_1$, B'$_1$) est situé, à partir de la première dérivation (D$_1$), à moins de la moitié de la longueur de ce canal dérivé d'ordre 1 ($l$ < L/2; $l'$ < L'/2) où $l$ signifit la longueur des branches de réseau à court-circuit et L signifit la longueur des canaux.

2. Dispositif selon la revendication 1, **caractérisé en ce qu'**il comprend un canal de liaison d'ordre 2 (BL$_2$), reliant les deux canaux dérivés d'ordre 2 (B$_2$, B'$_2$) et débouchant sur chaque canal dérivé d'ordre 2 à un point de court-circuit situé, à partir de la deuxième dérivation (D$_2$), à moins de la moitié de la longueur de ce canal dérivé d'ordre 2.

3. Dispositif selon la revendication 2, **caractérisé par** au moins un canal dérivé d'ordre n-1, se divisant, à une nième dérivation (D$_n$), en au moins deux canaux dérivés d'ordre n (B$_n$, B'$_n$), n étant supérieur ou égal à 3, de préférence à 4, de préférence à 7.

4. Dispositif selon la revendication 3, **caractérisé en ce que** chaque dérivation d'ordre n (D$_n$) est associée à un canal de liaison d'ordre n (BL$_n$), reliant les deux canaux dérivés d'ordre n (B$_n$, B'$_n$) et débouchant sur chaque canal dérivé d'ordre n à un point de court-cirtuit situé, à partir de la nième dérivation (D$_n$), à moins de la moitié de la longueur de ce canal dérivé d'ordre n.

5. Dispositif selon l'une des revendications précédentes, **caractérisé en ce que** les canaux constituent un système arborescent, l'arborescence étant symétrique ou non symétrique.

6. Dispositif selon la revendication 5, **caractérisé en ce que** le canal d'écoulement et les canaux dérivés constituent un système arborescent symétrique.

7. Dispositif selon la revendication 5, **caractérisé en ce que** le canal d'écoulement et les canaux dérivés constituent un système arborescent dissymétrique.

8. Dispositif selon l'une des revendications précédentes, **caractérisé en ce que** le ou chaque canal de liaison est pourvu de moyens (P, $p$) permettant de réduire localement sa section transversale.

9. Dispositif selon l'une des revendications précédentes, **caractérisé en ce que** le ou chaque canal de liaison comprend des plots (P, $p$) bouchant partiellement l'entrée de fluides dans ledit canal.

10. Dispositif selon l'une des revendications précédentes, **caractérisé en ce qu'**il comprend, de préférence en amont des écoulements, des moyens (24, 34) de génération de bouchons de fluide(s) mobiles, notamment de gouttes (G), séparés par un fluide porteur, le fluide des bouchons et le fluide porteur (T) étant non miscibles.

11. Dispositif selon l'une des revendications précédentes, **caractérisé en ce qu'**il s'agit d'un dispositif divergent, le canal d'écoulement (A) étant relié à une entrée de fluide, les canaux dérivés étant reliés à des sorties de fluides.

12. Dispositif selon les revendications 10 et 11, **caractérisé en ce que** le canal d'écoulement (A) est relié auxdits moyens de génération de bouchons.

13. Dispositif selon l'une des revendications 1 à 10, **caractérisé en ce qu'**il s'agit d'un dispositif convergent, le canal d'écoulement (A) étant relié à une sortie de fluide, les canaux dérivés étant reliés à des entrées de fluides.

14. Dispositif selon les revendications 10 et 13, **caractérisé en ce qu'**au moins un des canaux dérivés, de préférence au moins les deux, est (sont) relié(s) aux moyens de génération de bouchons.

15. Procédé pour diriger ou contrôler des flux de matière, de préférence pour manipuler des bouchons (G), de préférence en réseau, comprenant les étapes suivantes:

   - introduire un fluide à au moins une entrée du dispositif selon l'une des revendications 1 à 14, et
   - créer un écoulement du fluide, divergent ou convergent, à travers le canal d'écoulement (A) et les canaux dérivés.

16. Procédé selon la revendication 15, **caractérisé en ce que** le fluide comprend des bouchons de fluide(s) mobiles, ou gouttes ou entités dispersées, séparés par un fluide porteur, le fluide des bouchons et le fluide porteur étant non miscibles.

**17.** Procédé selon l'une des revendications 15 ou 16, **caractérisé en ce que** les bouchons dans le fluide en amont de la dérivation sont espacés de manière régulière.

**18.** Procédé selon l'une des revendications 15 à 17, **caractérisé en ce que**:

- on introduit le fluide à une entrée reliée au canal d'écoulement,
- l'écoulement du fluide comprenant les bouchons et le fluide porteur dans le canal est un écoulement divergent de l'entrée du fluide dans le canal d'écoulement (A) vers la dérivation, et de la dérivation vers les canaux dérivés,
- à la dérivation les bouchons:

  - sont distribués selon un rythme substantiellement régulier dans un canal dérivé puis dans l'autre, de préférence selon un rythme 1 puis 1, ou alors éventuellement selon un rythme différent par exemple 1 puis 2,
  - sont divisés en deux bouchons divisés, de préférence à un rythme substantiellement régulier, et/ou
  - coalescent avec au moins un des bouchons suivants.

**19.** Procédé selon l'une des revendications 15 à 17, **caractérisé en ce que**:

- on introduit deux fluides comprenant des bouchons, identiques ou différents, à deux entrées reliées chacune à un canal dérivé,
- l'écoulement des fluides comprenant les bouchons et le fluide porteur dans le canal est un écoulement convergent, de l'entrée des fluides dans les canaux dérivés vers la dérivation, et de la dérivation vers le canal d'écoulement (A),
- à la dérivation au moins un bouchon d'un canal dérivé coalesce avec au moins un bouchon de l'autre canal dérivé.

**20.** Procédé selon l'une des revendications 15 à 19, mis en oeuvre dans des opérations de préparation ou création de matériaux ("material engineering"), et/ou d'analyse, de mesures de propriétés.

**21.** Procédé selon l'une des revendications 15 à 19, **caractérisé en ce que** les bouchons dans le canal d'écoulement comprennent un mélange de composés, de préférence mélangés en amont de la formation des bouchons ou lors, de la formation des bouchons dans un dispositif convergent, et/ou mélangés dans les dérivations lors d'une coalescence.

**Claims**

**1.** Microfluidic flow device, comprising:

- at least one flow channel (A) opening into a first branching point ($D_1$) which divides into at least two branch channels of order 1 (B1, $B'_1$), and
- a connecting channel of order 1 ($BL_1$) which connects the two branch channels of order 1 and opens onto each branch channel of order 1 at a short-circuit point, **characterised in that** at least one ($B_1$) of the branch channels of order 1 opens onto a second branching point ($D_2$) which divides into at least two branch channels of order 2 ($B_2$, $B'_2$), and **in that** the short-circuit point associated with each branch channel of order 1 ($B_1$, $B'_1$) is situated, starting from the first branching point ($D_1$), at less than half the length of the branch channel of order 1 ($\underline{l}$ < L/2; $\underline{l}'$ < L'/2, where $\underline{l}$ denotes the length of the short-circuit network branches and L denotes the length of the channels).

**2.** Device according to claim 1, **characterised in that** it comprises a connecting channel of order 2 ($BL_2$) which connects the two branch channels of order 2 ($B_2$, $B'_2$) and opens onto each branch channel of order 2 at a short-circuit point situated, starting from the second branching point ($D_2$), at less than half the length of the branch channel of order 2.

**3.** Device according to claim 2, **characterised by** at least one branch channel of order n-1 which divides, at an nth branching point ($D_n$), into at least two branch channels of order n ($B_n$, $B'_n$), n being greater than or equal to 3, preferably to 4, preferably to 7.

4. Device according to claim 3, **characterised in that** each branching point of order n ($D_n$) is associated with a connecting channel of order n ($BL_n$) which connects the two branch channels of order n ($B_n$, $B'_n$) and opens onto each branch channel of order n at a short-circuit point situated, starting from the nth branching point ($D_n$), at less than half the length of the branch channel of order n.

5. Device according to any one of the preceding claims, **characterised in that** the channels constitute an arborescent system, the arborescence being symmetrical or non-symmetrical.

6. Device according to claim 5, **characterised in that** the flow channel and the branch channels constitute a symmetrical arborescent system.

7. Device according to claim 5, **characterised in that** the flow channel and the branch channels constitute an unsymmetrical arborescent system.

8. Device according to any one of the preceding claims, **characterised in that** the or each connecting channel is provided with means (P, p) enabling its transverse cross-section to be reduced locally.

9. Device according to any one of the preceding claims, **characterised in that** the or each connecting channel contains plugs (P, p) which partially block the entry of fluids into said channel.

10. Device according to any one of the preceding claims, **characterised in that** it comprises, preferably upstream of the flows, means (24, 34) for generating movable plugs of fluid(s), especially droplets (G), separated by a carrier fluid, the fluid of the plugs and the carrier fluid (T) being immiscible.

11. Device according to any one of the preceding claims, **characterised in that** it is a divergent device, the flow channel (A) being connected to a fluid inlet, the branch channels being connected to fluid outlets.

12. Device according to claims 10 and 11, **characterised in that** the flow channel (A) is connected to said means for generating plugs.

13. Device according to any one of claims 1 to 10, **characterised in that** it is a convergent device, the flow channel (A) being connected to a fluid outlet, the branch channels being connected to fluid inlets.

14. Device according to claims 10 and 13, **characterised in that** at least one of the branch channels, preferably at least both, is(are) connected to the means for generating plugs.

15. Method for directing or controlling material flows, preferably for man-pulating plugs (G), preferably in a network, comprising the following steps:

- introducing a fluid at at least one inlet of the device according to any one of claims 1 to 14, and
- creating a divergent or convergent flow of the fluid through the flow channel (A) and the branch channels.

16. Method according to claim 15, **characterised in that** the fluid contains movable plugs of fluid(s), or droplets or dispersed entities, separated by a carrier fluid, the fluid of the plugs and the carrier fluid being immiscible.

17. Method according to either claim 15 or claim 16, **characterised in that** the plugs in the fluid upstream of the branching point are spaced evenly.

18. Method according to any one of claims 15 to 17, **characterised in that**:

- the fluid is introduced at an inlet connected to the flow channel,
- the flow of the fluid containing the plugs and the carrier fluid in the channel is a divergent flow from the inlet cf the fluid into the flow channel (A) to the branching point, and from the branching point to the branch channels,
- at the branching point, the plugs:

- are distributed according to a substantially regular pattern into one branch channel and then into the other, preferably according to a pattern 1 then 1, or optionally according to a different pattern, for example 1 then 2,
- are divided into two divided plugs, preferably in a substantially regular pattern, and/or

- coalesce with at least one of the following plugs.

**19.** Method according to any one of claims 15 to 17, **characterised in that**:

- two fluids containing identical or different plugs are introduced at two inlets each connected to a branch channel,
- the flow of the fluids containing the plugs and the carrier fluid in the channel is a convergent flow from the inlet of the fluids into the branch channels to the branching point, and from the branching point to the flow channel (A),
- at the branching point, at least one plug from one branch channel coalesces with at least one plug from the other cranch channel.

**20.** Method according to any one of claims 15 to 19, carried out in operations of preparing or creating materials (material engineering) and/or of analysis, of measuring properties.

**21.** Method according to any one of claims 15 to 19, **characterised in that** the plugs in the flow channel comprise a mixture of compounds, preferably mixed upstream of the formation of the plugs or at the time of formation of the plugs in a convergent device, and/or mixed in the branching points at the time of coalescence.

**Patentansprüche**

**1.** Mikrofluid-Strömungsvorrichtung, umfassend:

- mindestens einen Strömungskanal (A), der in eine erste Verzweigung ($D_1$) mündet, die sich in mindestens zwei verzweigte Kanäle ($B_1$, $B'_1$) erster Ordnung aufteilt, und
- einer Verbindungskanal ($BL_1$) erster Ordnung, der die zwei verzweigten Kanäle erster Ordnung verbinden und der an einem Kurzschlusspunkt in jeden verzweigten Kanal erster Ordnung mündet,

**dadurch gekennzeichnet, dass**
mindestens einer ($B_1$) der verzweigten Kanäle erster Ordnung in eine zweite Verzweigung ($D_2$) mündet, die sich in mindestens zwei verzweigte Kanäle zweiter Ordnung ($B_2$, $B'_2$) aufteilt, und dass der zugeordnete Kurzschlusspunkt von der ersten Verzweigung gesehen bei weniger als der Hälfte der Länge dieses verzweigten Kanals erster Ordnung liegt (1<L/2; 1'<L'/2), wobei 1 die Länge der zweige des kurzgeschlossenen Netzes und L die Länge der Kanäle bezeichnet.

**2.** Vorrichtung nach Anspruch 1,
**dadurch gekennzeichnet, dass**
sie einen Verbindungskanal zweiter Ordnung ($BL_2$) umfasst, der die zwei verzweigten Kanäle zweiter Ordnung ($B_2$, $B'_2$) verbindet und in jeden verzweigten Kanal zweiter Ordnung an einem Kurzschlusspunkt mündet, der von der zweiten Verzweigung ($D_2$) gesehen bei weniger als der Hälfte der Länge dieses verzweigten Kanals zweiter Ordnung liegt.

**3.** Vorrichtung nach Anspruch 2,
**gekennzeichnet durch**
mindestens einen verzweigten Kanal n-1 ter Ordnung, der sich an einer n-ten Verzweigung ($D_n$) in mindestens zwei verzweigte Kanäle n-ter Ordnung ($B_n$, $E'_n$) aufteilt, wobei n größer oder gleich 3, vorzugweise größer oder gleich 4, bevorzugt größer oder gleich 7 ist.

**4.** Vorrichtung nach Anspruch 3,
**dadurch gekennzeichnet, dass**
jede Verzweigung n-ter Ordnung ($D_n$) einem Verbindungskanal ($BL_n$)n-ter Ordnung zugeordnet ist, der die zwei verzweigten Kanäle n-ter Ordnung ($B_n$, $B'_n$) verbindet und in jeden verzweigten Kanal n-ter Ordnung an einem Kurzschlusspunkt mündet, der von der n-ten Verzweigung ($D_n$) gesehen, an einer Stelle weniger als die Hälfte der Länge dieses verzweigten Kanals n-ter Ordnung liegt.

**5.** Vorrichtung nach einem der vorhergehenden Ansprüche,
**dadurch gekennzeichnet, dass** die Kanäle ein Baumsystem bilden, wobei das Baumdiagramm symmetrisch oder nichtsymmetrisch ist.

**6.** Vorrichtung nach Anspruch 5,
**dadurch gekennzeichnet, dass**
der Strömungskanal und die verzweigten Kanäle ein symmetrisches Baumsystem bilden.

**7.** Vorrichtung nach Anspruch 5,
**dadurch gekennzeichnet, dass**
der Strömungskanal und die verzweigten Kanäle ein asymmetrisches Baumsystem bilden

**8.** Vorrichtung nach einem der vorhergehenden Ansprüche,
**dadurch gekennzeichnet, dass**
der oder jeder Verbindungskanal mit Mitteln (P, p) versehen ist, die ermöglichen, lokal seinen Querschnitt zu verringern.

**9.** Vorrichtung nach einem der vorhergehenden Ansprüche,
**dadurch gekennzeichnet, dass**
der oder jeder Verbindungskanal Stopfen (P, p) umfasst, die teilweise den Eintritt der Fluide in diesen Kanal verstopfen.

**10.** Vorrichtung nach einem der vorhergehenden Ansprüche,
**dadurch gekennzeichnet, dass**
sie vorzugsweise strömungsaufwärts Mittel (24, 34) zur Erzeugung von mobilen Fluidstopfen, insbesondere Tropfen (G) umfasst, die durch ein Trägerfluid getrennt sind, wobei das Fluid der Stopfen und das Trägerfluid (T) nicht mischbar sind.

**11.** Vorrichtung nach einem der vorhergehenden Ansprüche
**dadurch gekennzeichnet, dass**
es sich um eine divergente Vorrichtung handelt, wobei der Strömungskanal (A) mit einem Fluideingang verbunden ist und die verzweigten Kanäle mit Fluidausgängen verbunden sind.

**12.** Vorrichtung nach Anspruch 10 oder 11
**dadurch gekennzeichnet, dass**
der Strömungskanal (A) mit den Mitteln zur Erzeugung von Stopfen verbunden ist.

**13.** Vorrichtung nach einem der Ansprüche 1 bis 10
**dadurch gekennzeichnet, dass**
es sich um eine konvergierende Vorrichtung handelt, wobei der Strömungskanal (A) mit einem Fluidausgang verbunden ist und die verzweigten Kanäle mit Fluideingängen verbunden sind.

**14.** Vorrichtung nach den Ansprüchen 10 und 13
**dadurch gekennzeichnet, dass**
mindestens einer der verzweigten Kanäle, vorzugsweise mindestens die zwei mit den Mitteln zur Erzeugung von Stopfen verbunden ist (sind).

**15.** Verfahren zum Lenken oder Steuern von Stoffströmen, vorzugsweise um Stopfen (G) zu handhaben, vorzugsweise im Netz, folgende Schritte umfassend:

- Einführen eines Fluids in mindestens einen Eingang der Vorrichtung nach einem der Ansprüche 1 14 und
- Erzeugen einer divergierenden oder konvergierenden Fluidströmung durch den Strömungskanal (A) und die verzweigten Kanäle.

**16.** Verfahren nach Anspruch 15,
**dadurch gekennzeichnet, dass**
das Fluid mobile Fluidstopfen oder Tropfen oder verteilte Entitäten umfasst, die von einem Trägerfluid getrennt sind, wobei das Fluid der Stopfen und das Trägerfluid nicht mischbar sind.

**17.** Verfahren nach einem der Ansprüche oder 15 oder 16,
**dadurch gekennzeichnet, dass**
die Stopfen in dem Fluid stromaufwärts zur Verzweigung in regelmäßiger Weise beabstandet sind.

**18.** Verfahren nach einem der Ansprüche 15 bis 17 **dadurch gekennzeichnet, dass**

- das Fluid in einen mit dem Strömungskanal verbundenen Eingang eingeführt wird,
- die Fluidströmung Stopfen umfasst und das Trägerfluid in dem Kanal eine divergierende Strömung von Eintritt des Fluids in den Strömungskanal (A) zu der Verzweigung und von der Verzweigung zu den verzweigten Kanälen ist,
- an der Verzweigung die Stopfen:

- gemäß einem im Wesentlichen regelmäßigen Takt in einen verzweigten Kanal, dann in den anderen, vorzugsweise gemäß einem Takt 1 zu 1, oder dann möglicherweise gemäß einem unterschiedlichen Takt, beispielsweise 1 zu 2, verteilt werden,
- in zwei aufgeteilte Tropfen geteilt werden, vorzugsweise in einem im Wesentlichen regelmäßigen Takt und/oder
- mit mindestens einem der folgenden Stopfen vereint werden.

**19.** Verfahren nach einem der Ansprüche 15 bis 17,
**dadurch gekennzeichnet, dass**:

- zwei gleiche oder unterschiedliche Stopfen enthaltende Fluide in zwei Eingänge eingeführt werden, die jeweils mit einem verzweigten Kanal verbunden sind,
- die Strömung der Fluide, die die Stopfen und das Trägerfluid in dem Kanal umfassen, eine konvergierende Strömung von dem Eingang der Fluide in die verzweigten Kanäle zu der Verzweigung und von der Verzweigung zu dem Strömungskanal (A) ist,
- an der Verzweigung mindestens ein Stopfen eines verzweigten Kanals mit mindestens einem Stopfen des anderen verzweigten Kanals vereint werden.

**20.** Verfahren nach einem der Ansprüche 15 bis 19, durchgeführt bei Operationen der Vorbereitung oder Erzeugung von Materialien ("material engineering") und/oder der Analyse, der Messung von Eigenschaften.

**21.** Verfahren nach einem der Ansprüche 15 bis 19,
**dadurch gekennzeichnet, dass**
die Stopfen in dem Strömungskanal eine Mischung von Zusammensetzungen aufweisen, die vorzugsweise stromaufwärts zu der Bildung der Stopfen oder bei der Bildung der Stopfen in einer konvergierenden Vorrichtung und/oder in den Abzweigungen bei einem Zusammenwachsen gemischt werden.

*Fig. 1*

*Fig. 1A*

*Fig. 2*

*Fig. 3*

Fig. 3A

Fig. 10

EP 1 931 461 B1

*Fig. 4*

*Fig. 5*

21

Fig. 6A

Fig. 6B

EP 1 931 461 B1

$$Q$$

$$R_2 \qquad Q_2 \qquad r_2 \quad Q'_2 \quad Q'_1 \quad r_1 \qquad Q_1 \qquad R_1$$

$$Q_\Delta \qquad \Delta$$

*Fig.* 7A

*Fig.* 7B

*B*     *A*     *D*     BRC'     *B'*

$$l'$$

$BL_1$     $BL_2$

$BL_3$     $BL$

*Fig. 8*

*Fig. 9*

Fig. 11

EP 1 931 461 B1

Fig. 12

EP 1 931 461 B1

Fig. 13

*Fig. 14*

**EP 1 931 461 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004038363 A
- EP 1525919 A
- US 6494614 B
- US 6136272 A
- WO 02083291 A

**Littérature non-brevet citée dans la description**

- Quantitative analysis of molecular interaction in a microfluidic channel : The T-sensor. *anal. Chem.,* 1999, vol. 71, 5340-5347